**Europäisches Patentamt**

(19) **European Patent Office**

**Office européen des brevets**

(11) Publication number: **0 117 011**
**A1**

(12) **EUROPEAN PATENT APPLICATION**

(21) Application number: **84200242.0**

(22) Date of filing: **21.02.84**

(51) Int. Cl.³: **A 23 C 9/13**

(30) Priority: **22.02.83 NL 8300662**

(43) Date of publication of application:
**29.08.84 Bulletin 84/35**

(84) Designated Contracting States:
**BE DE FR GB IT LU NL**

(71) Applicant: **DMV-Campina B.V.**
**NCB Laan 68**
**NL-5462 GE Veghel(NL)**

(72) Inventor: **Evers, Paulus Hendricus Johannes Maria**
**Creytestraat 11**
**NL-5841 AL Oploo(NL)**

(74) Representative: **Urbanus, Henricus Maria, Ir. et al,**
**c/o Vereenigde Octrooibureaux Nieuwe Parklaan 107**
**NL-2587 BP 's-Gravenhage(NL)**

(54) Carbonated fermented milk beverage.

(57) The invention provides a long-life beverage on the basis of fermented milk, for example, a yoghurt drink, into which gaseous carbon dioxide has been introduced. The preparation of the drink comprises an accurately controlled process for preparing a long-keeping, fermented milk beverage, followed by introducing gaseous carbon dioxide under super-atmospheric pressure, and packaging the product in a gas-tight manner.

EP 0 117 011 A1

Title: Carbonated fermented milk beverage.

This invention relates to a process for preparing a fermented milk beverage having good keeping characteristics. A fermented milk beverage means a drink containing as an essential component milk in which flavours have been produced owing to the action of micro-organisms, which has imparted an agreeably sour, quite unique character to the milk. Netherlands patent No. 171,009 describes a process for preparing a long-life yoghurt beverage, which comprises preparing the yoghurt in known manner by fermenting milk to a pH value conventional for yoghurt, and thereafter adding water or an aqueous liquid and, if desired, one or more of the following ingredients: fruit juice, fruit concentrate and/or fruit essence, sugars, pectin, flavouring and/or colouring matter, and thereafter subjecting the mixture to homogenization, warming it to a temperature of between 45° and 55° C while keeping the liquid in agitation and maintaining a temperature difference from the heating medium of no more than 10° C, thereafter cooling to a temperature between 25° and 35° C, and re-homogenizing, and finally pasteurizing or sterilizing the product in the packaged or non-packaged state.

Although, generally speaking, this process is productive of wholesome and palatable drinks, it have been found that this type of drink is yet not attractive to consumer groups in a specific age bracket, or in other words, does not satisfy the gustatory profile desired by members of these groups.

This is caused in particular by the fact that milk beverages, in general, and fermented milk beverages, in particular, lack an effercescent or sparkling effect, which, as such, is experienced as a pleasant mouth feeling.

It is known that freshly prepared butter milk has a certain titillating and sparkling character immediately after termination of the fermentation, which is comparable to that of carbonated drinks. This is caused by the generation of carbon dioxide gas which is formed during the acid formation. Although, from the point of view of flavour technology, this is attractive for butter milk, and specifically produces a fresh, extra thirst-quenching effect, it presents substantial problems in dairy technology. In fact, owing to the presence of the gaseous carbon dioxide, curdling or separation arises in the butter milk in a short period of time, followed by whey separation, which renders the product as such utterly unfit for consumption. By means of agitators with a low (possibly controllable) speed, or by passing the product through a reservoir which is under a partial vacuum, this carbon dioxide gas is removed. As a result the stability of the butter milk is ensured, but the gustatory profile of the product has deteriorated.

It has now been found that a new type of fermented milk beverage can be prepared which, on the one hand, has the characteristic properties thereof and, on the other hand, satisfies the gustatory profile desired by the target groups referred to. According to the invention, milk or skim milk is fermented in known manner, followed by mixing the resulting product, as desired, with water or an aqueous liquid, possibly adding sugars, fruit juice, fruit concentrate, fruit essence, or flavouring and/or colouring matter, and pectin, followed by homogenizing the mixture, subjecting the mixture to a thermal treatment, comprising warming to a temperature between 45° and 55° C while the mass is being agitated and while maintaining a temperature difference between the mass and the heating medium of no more than 10° C, and subsequently cooling to a temperature between 25° and 35° C, re-homogenizing at that temperature, and thereafter subjecting the mass to a thermal treatment to pasteurize or sterilize it, and thereafter introducing gaseous carbon dioxide into the beverage thus produced, and subsequently packaging the beverage in a gas-tight manner.

In a favourable variant of the method according to the invention, first the long-life fermented milk beverage is prepared, and subsequently at least a part of the carbon dioxide gas is introduced in the form of a carbonated beverage, such as cola drink, bitter lemon drink, and the like.

It is also possible to prepare a beverage well suited to the purposes of the present invention by concentrating the long-life fermented milk beverage after its preparation to a part of its original volume, for example, by evaporation, and thereafter introducing at least a portion of the gaseous carbon dioxide by mixing with a carbonated drink, whereby the milk beverage is at the same time adjusted to the desired percentage of milk components, and thereafter packaging the resulting beverage under a superatmospheric pressure of carbon dioxide gas.

It is noted that the moments when the additives, such as fruit concentrate and the like, are introduced into the fermented beverage are not critical and that these may be added, for example, shortly before the pasteurizing or sterilizing step, or may be added to. the beverage in the form of mixtures that have been pasteurized or preserved otherwise by themselves.

The invention is illustrated in and by the following examples of the process according to the invention.


Example I


1000 kg milk with a fat content of less than 0.3 % by weight was mixed with 70 kg saccharose and 10 kg glucose. This mixture was successively homogenized at a pressure of 200 Bar (=20 MPa), heated to 98° C, maintained at that temperature for 2.5 minutes, and cooled to 30° C. The resulting mixture was subsequently subjected to a fermentation with 0.25 kg IST-culture (standard culture of Streptococcus thermophilus and Lactobacillus bulgaricus, supplied by NIZO, which culture produces little slime but much flavour), which fermentation was continued until a pH value of 4.2 was reached. After cooling to 15° C, the pH value was checked and adjusted to a value of 4.1 by adding food-quality citric acid. The mixture was then mixed with stirring with 27 kg water, in which were dissolved 2 kg citrous pectin and 3.5 kg orange essence. After stirring, the mixture was homogenized at a pressure of 200 bar, and then warmed up to a temperature of 52° C in a suitable heat exchanger, while agitating the mass and using a temperature difference between the mass and the heating medium of 5° C. Immediately after this temperature was reached, the mixture was cooled to a temperature of 32° C while the mass was being agitated, and a temperature difference of 5° C was maintained. At the temperature of 32° C, the mixture was again homogenized at a pressure of 200 bar. Subsequently the mass was heated in a coil pasteurizer to 90° C, and kept at this temperature for 30 seconds, whereafter the product was cooled. Subsequently the product was brought under a carbon dioxide atmosphere at a pressure of 1.2 bar, and the beverage thus carbonated was packaged in a gas-tight manner. After six months, the product was still perfectly stable.

Example II

The procedure of Example I was followed, except that a cola essence was used, and the carbon dioxide gas was added under a pressure of 8 bar. After more than six months, no deviation in flavour or structure whatsoever was apparent.

Example III

1000 kg skim milk with a fat content of 0.4 % was mixed with 50 kg saccharose and 10 kg glucose. This mixture was homogenized at a pressure of 200 bar, subsequently heated to a temperature of 93° C, and kept at this temperature for 4 minutes. The milk was subsequently subjected to a fermentation with 0.5 kg of inoculating starter (composed of the lactic acid bacteria species <u>Streptococcus lactis</u> and <u>Streptococcus cremoris</u>) until a pH value of 5.0 was reached. Thereafter the procedure of Example I was followed, except that 3.6 kg of raspberry concentrate was added instead of orange essence, while the product was brought under a carbon dioxide atmosphere of 4.6 bar. The result was an effervescent butter milk beverage having a pleasant fresh taste, which after non-refrigerated storage for three months was still perfectly stable, and had fully maintained its flavour characteristics.

Example IV

The procedure of Example III was followed, but no fruit juice, fruit concentrate, or flavour was added, so that an effervescent butter milk with a natural taste was obtained. This beverage, too, after being kept in its package outside the refrigerator for three months did not exhibit any formation of sediment whatsoever, no separation of clear liquid (whey separation) and had fully retained its fresh flavour.

Example V

The procedure of Example I was followed, except that no orange essence was added. In this case, however, a portion of the carbon dioxide gas was introduced into the beverage by mixing with bitter lemon drink in the proportion of fermented milk beverage to bitter lemon drink of 3:1, whereafter the drink was packaged in a gas-tight manner under a carbon dioxide gas pressure of 2.4 bar. The result was an effervescent drink of fresh flavour, which after storage at room temperature for three months was still completely stable, and had not deteriorated in flavour at all.

Example VI

The procedure of Example I was followed, but no orange essence was added, and the long-life fermented milk beverage prepared was evaporated to one third of its original volume in a gravity evaporator under the usual conditions, and subsequently mixed with bitter lemon drink in such a mixing ratio as to produce a beverage having 90 % of the original volume of the long-life fermented milk beverage, which was packaged under a carbon dioxide pressure of 2.4 bar. After storage outside the refrigerator for three months, the resulting product was still perfectly stable.

Example VII

The procedure of Example VI was followed, but now the fermented milk beverage was evaporated to half its original volume in the gravity evaporator, and was mixed with cola drink  in such a quantity as to produce a beverage having the original volume of the long-life fermented milk beverage, which beverage was packaged under a pressure of carbon dioxide gas of 2.4 bar (gauge). The resulting beverage clearly combined the character of both a cola drink and a yoghurt drink. After storage outside the refrigerator for three months, the drink was found to have fully kept its flavour characteristics, and also its physical stability.

## C L A I M S

1.      A process for preparing a long-life beverage on the basis of fermented milk, which comprises preparing the same in known manner by fermenting milk to the required pH value, mixing the resulting product, as desired, with water or an aqueous liquid, possibly adding sugars, fruit juice, fruit concentrate, fruit essence, or flavouring and/or colouring matter, and pectin, followed by homogenizing the mixture, subjecting the mixture to a thermal treatment, comprising warming to a temperature between 45° and 55° C while the mass is being agitated and while maintaining a temperature difference between the mass and the heating medium of no more than 10° C, and subsequently cooling to a temperature between 25° and 35° C, re-homogenizing at that temperature, and thereafter subjecting the mass to a thermal treatment to pasteurize or sterilize it, characterized by introducing gaseous carbon dioxide into the long-life, fermented milk beverage under superatmospheric pressure, and thereafter packaging the beverage in a gas-tight manner.

2.      A process according to claim 1, characterized in that the gaseous carbon dioxide is introduced into the long-life, fermented milk beverage at least partly in the form of a carbonated drink.

3.      A process according to claim 1 and 2, characterized by concentrating the long-life fermented milk beverage to a part of its original volume, and thereafter introducing at least a portion of the gaseous carbon dioxide by mixing with a carbonated drink, whereby the milk beverage is at the same time adjusted to the desired percentage of milk components, and thereafter packaging the resulting beverage under a superatmospheric pressure of carbon dioxide gas.

**0117011**
Application number

European Patent
Office

**EUROPEAN SEARCH REPORT**

EP 84 20 0242

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | GB-A- 984 165 (R. CHENIER)<br>* Claims 1,3,12,13,15; examples 2,4,6 * | 1,2 | A 23 C 9/13 |
| D,Y | GB-A-2 044 068 (DMV-CAMPINA)<br>* Claims 1-7 * | 1,2 | |
| A | J.L. RASIC et al.: "Yoghurt. Scientific grounds, technology, manufacture and preparations", vol. 1, 1978, pages 343-344, Technical Dairy Publishing House, Copenhagen, DK<br>* Pages 343-344 * | 3 | |
| A | FR-A-1 546 756 (M. MIZRAHI)<br>* Abstract, points 1,2; page 1, column 2, paragraph 4 - page 2, column 1, paragraph 2 * | 1,2 | **TECHNICAL FIELDS SEARCHED (Int. Cl. ³)**<br><br>A 23 C |
| A | US-A-1 610 962 (T. MITTENDORF) | | |

The present search report has been drawn up for all claims

| Place of search | Date of completion of the search | Examiner |
|---|---|---|
| THE HAGUE | 23-05-1984 | DESMEDT G.R.A. |